Europäisches Patentamt

European Patent Office

Office européen des brevets

(19)

(11) **EP 1 103 526 A2**

(12) **EUROPÄISCHE PATENTANMELDUNG**

(43) Veröffentlichungstag:
**30.05.2001 Patentblatt 2001/22**

(51) Int Cl.[7]: **C01G 53/00**, H01M 4/52

(21) Anmeldenummer: **00124313.8**

(22) Anmeldetag: **16.11.2000**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **29.11.1999 DE 19957456**

(71) Anmelder: **H.C. Starck GmbH & Co. KG
38642 Goslar (DE)**

(72) Erfinder:
• **Glemser, Oskar, Prof. Dr.
37077 Göttingen (DE)**
• **Albrecht, Sven, Dr.
38640 Goslar (DE)**

(74) Vertreter: **Drope, Rüdiger, Dr. et al
c/o Bayer AG
Konzernbereich RP
Patente und Lizenzen
51368 Leverkusen (DE)**

(54) **Aktivmaterial für wiederaufladbare Batterien**

(57) Es wird ein Mischmetallhydroxid mit Brucit-struktur beschrieben, das Nickelhydroxid als Haupt-komponente und mindestens ein dreiwertiges Metall aus der Gruppe Co, Fe, Al, Ga, In, Sc, Y und La in einer Menge von 12 bis 30 Atom-%, bezogen auf die Summe der Metallkomponenten einschließlich Ni, enthält.

EP 1 103 526 A2

## Beschreibung

Die vorliegende Erfindung betrifft ein Aktivmaterial für wiederaufladbare Batterien, speziell ein Metall(III)ionen-substituiertes Nickelhydroxid mit brucitartiger Struktur, ein Verfahren zu dessen Herstellung sowie dessen Verwendung als Elektrodenmaterial für Sekundärbatterien.

Nickelhydroxid wird als Kathodenmaterial für alkalische Sekundärbatterien wie Nickel/Cadmium- oder Nickel/Metallhydrid-Batterien verwendet. Eine für den technischen Einsatz entscheidende elektrochemische Größe ist die massenbezogene Kapazität. Sie ist abhängig von dem Nickelgehalt des Nickelhydroxids und der Nickelausnutzung. Der Zusammenhang der massenbezogenen Kapazität Q in mAh/g in Abhängigkeit von dem Nickelgehalt in Gew.-% des Kathodenmaterials und der Nickelausnutzung in % EES (Einelektronenschritt) ergibt sich wie folgt:

$$Q = \frac{\text{Gew.-\%Ni} \cdot \text{\%EES} \cdot F}{58{,}69 \cdot 3600 \cdot 10} \; [\text{mAh/g}]$$

mit

F =         Faraday Konstante = 96487 $^{\text{A·s/mol}}$
58,69 =     Molmasse des Nickels, g/mol
3600 =      Faktor für Umrechnung von Sekunden in Stunden
10 =        Faktor für Umrechnung von % in Verhältnis Zahlen und mA in A.

Danach ergibt sich eine theoretische massenbezogene Kapazität bei 100 % EES von 289 mAh/g. Technisch einsetzbare Nickelhydroxide weisen allerdings zwischen 4 und 6 % Modifizierungsmetallgehalte sowie 1 bis 2 % Wasser bezogen auf den Gesamtmetallgehalt auf, so dass diese bei 100 %iger Nickelausnutzung lediglich eine massenbezogene Kapazität von 252 bis 266 mAh/g aufweisen. Die 100 %ige Nickelausnutzung dieses Nickelhydroxids ist mit dem 1-Elektronenschritt (und 1-Protonenschritt) pro Nickelatom des $\beta\text{-Ni}^{(II)}(\text{OH})_2$ zum $\beta\text{-Ni}^{(III)}\text{OOH}$ beim Laden der Batterie verbunden.

Durch Überladung der Batterie kommt es zu einer weiteren Deprotonisierung und Aufoxidation eines Teils des Nickels zum $\text{Ni}^{(IV)}$, d.h. zur Ausbildung von $\gamma\text{-NiOOH}$. Dabei werden zur Ladungskompensation Wassermoleküle und Alkaliionen in Zwischenschichten eingelagert. Die Ausbildung von $\gamma\text{-NiOOH}$ ist demgemäß mit einer Aufweitung der Nickel-Schichtabstände im Gitter verbunden. Die Entladung des $\gamma\text{-NiOOH}$ erfolgt unter Abgabe von Alkaliionen an den Elektrolyten, wobei sich $\alpha\text{-Ni(OH)}_2$ bildet. Der Übergang $\alpha\text{-}\gamma$ ist theoretisch mit einem 1,67-Elektronenschritt, d.h. 167 % EES ausgestattet. Allerdings lässt sich dieser 1,67-Elektronenschritt technisch nicht nutzen, da das $\alpha\text{-Ni(OH)}_2$ im alkalischen Elektrolyten instabil ist und durch Alterung zum $\beta\text{-Ni(OH)}_2$ unter Rückbildung der beim Übergang $\beta$-NiOOH-$\gamma$-NiOOH erfolgten Volumenvergrößerung übergeht.

Durch Einführung 3-wertiger Metalle in das Nickelhydroxid gelingt es, die $\alpha$-Struktur (Pyroaurit) zu stabilisieren. Allerdings sind bei der Pyroauritstruktur zur Gewährleistung der Ladungsneutralität Anionen sowie Wassermoleküle zwischen den Nickelhydroxid-Schichten eingelagert, so dass das Gitter aufgeweitet ist. Zwar gelingt es bei derartigen, durch 3-wertige Ionen modifizierten Nickelhydroxiden mit Pyroauritstruktur einen stabilen 1,5-Elektronenschritt pro Nickelatom zu realisieren, jedoch ist die Speicherdichte einerseits durch die elektrochemisch nicht aktiven 3wertigen Ionen und andererseits durch die eingelagerten Anionen und Wassermoleküle reduziert.

Es wurde nun gefunden, dass es gelingt, durch Suspendierung des mit 3-wertigen Ionen modifizierten Pyroaurit-Nickelhydroxids in Alkalilösung, Abtrennen von der Alkalilösung und Trocknung mit der noch anhängenden Alkalilösung die Pyroauritstruktur in eine brucitartige Struktur unter Erhaltung des 1,67-Elektronenschrittes zu überführen. Dabei werden Zwischenschicht-Anionen und Wasser aus dem Gitter entfernt, so dass der Schichtabstand unter Erhöhung der Speicherdichte reduziert wird.

Gegenstand der vorliegenden Erfindung ist demgemäß ein Mischmetallhydroxid mit Brucitstruktur, das Nickelhydroxid als Hauptkomponente und mindestens ein 3-wertiges Metall aus der Gruppe Co, Fe, Al, Ga, In, Sc, Y und La in einer Menge von 12 bis 30 Atom-% bezogen auf die Summe der Metallkomponenten einschließlich Nickel enthält.

Bevorzugt ist das 3-wertige Metall in einer Menge von 12 bis 25 Atom-% bezogen auf die Summe aller Metallkomponenten vorhanden.

Bevorzugte 3-wertige Metalle sind Co, Fe und Al, insbesondere bevorzugt Al.

Besonders bevorzugte erfindungsgemäße Mischmetallhydroxide mit Brucitstruktur enthalten neben der oben genannten ersten Gruppe 3-wertiger Metalle mindestens eines der Elemente Co, Fe, Mn, Cr, Ti, Zr und Cu, wobei sich das Element dieser zweiten Gruppe von dem 3-wertigen Metall der ersten Gruppe unterscheidet und das 3-wertige Metall der ersten Gruppe in einer Menge von bis zu 40 Atom-% substituiert.

Bevorzugte erfindungsgemäße Mischmetallhydroxide enthalten Al und Co, wobei das Atomverhältnis von Al zu Co 2 bis 4 beträgt, besonders bevorzugt 2,5 bis 3,5.

Die erfindungsgemäßen Mischmetallhydroxide sind ferner durch einen durch Röntgenbeugung bestimmten Schichtabstand von 4,3 bis 4,8 Å bestimmt. Der Reflex ist zu kleinerem θ-Winkel durch eine Schulter, die einem Gitterabstand von 5,2 bis 5,7 Å entspricht, verbreitert.

Gegenstand der Erfindung ist auch ein Verfahren zur Herstellung der erfindungsgemäßen Mischhydroxide durch Co-Fällung von Mischhydroxiden mit Pyroauritstruktur aus entsprechenden Metallsalzlösungen, Suspendierung des Fällungsproduktes in Alkalilösung, Abtrennung von der Alkalilösung und Trocknen in Gegenwart der anhängenden Alkalilösung.

Bevorzugt wird eine mindestens 0,5-molare Alkalihydroxidlösung eingesetzt.

Vorzugsweise wird für die alkalische Trocknung eine mindestens 0,9-molare Alkalihydroxidlösung, insbesondere bevorzugt eine mindestens 1-molare Alkalihydroxidlösung eingesetzt. Bevorzugtes Alkalihydroxid ist Natriumhydroxid.

Die Herstellung der Mischhydroxide mit Pyroauritstruktur erfolgt durch Herstellen einer wässrigen Lösung durch Auflösen entsprechender wasserlöslicher Metallsalze der Metallkomponenten in dem gewünschten Verhältnis und Fällung aus der Lösung durch pH-Wert-Einstellung auf 10 bis 13 durch Zugabe von Alkalihydroxidlösungen. Das Verfahren kann diskontinuierlich oder kontinuierlich durch gleichzeitige Zuführung der Metallsalzlösung und der Alkalihydroxidlösung zu einem Reaktionsbehälter unter kontinuierlichem Abzug der Fällungssuspension erfolgen. Als Metallsalze geeignet sind Halogenide (vorzugsweise Fluoride oder Chloride), Carbonate, Sulfate, Nitrate, Acetate, Oxalate, Borate und/oder Phosphate, soweit diese eine hinreichende Löslichkeit aufweisen.

Um gegebenenfalls in der Fällungssuspension vorhandene zweiwertige Modifizierungsmetallionen in die 3-wertige Stufe zu oxidieren, kann es ferner zweckmäßig sein, Oxidationsmittel zur Fällungssuspension zu geben, wie z.B. Sauerstoff, $H_2O_2$, Hypochlorit oder Peroxodisulfate.

Als Alkalilösungen für die Durchführung der Fällung kommen Ammoniumhydroxid, Lithiumhydroxid, Kaliumhydroxid oder Natriumhydroxid in Frage. Bevorzugt ist Natriumhydroxid.

Ferner kann es zweckmäßig sein, im Anschluss an die Fällung die in das Mischmetallhydroxid eingebauten Anionen der Pyroauritstruktur zunächst durch Carbonationen auszutauschen. Dies kann durch Behandlung des Fällungsproduktes mit Alkalicarbonat- oder Alkalihydrogencarbonat-Lösung durchgeführt werden.

Das Fällungsprodukt wird nach Abtrennung von der Mutterlauge und Waschung zur Entfernung von restlicher Mutterlauge vorzugsweise ohne Zwischentrocknung in einer Alkalihydroxidlösung resuspendiert. Nach Abtrennung von der Alkalihydroxidlösung wird vorsichtig bei Temperaturen unterhalb 80°C, insbesondere unterhalb 60°C, weiter bevorzugt unter vermindertem Druck, getrocknet. Je niedriger der Druck bei der Trocknung gewählt wird, desto höher sollte die minimale Konzentration der Alkalihydroxidlösung sein. Beispielsweise ist bei einem Trocknungsdruck von 10 mbar eine Alkalihydroxidkonzentration von mindestens 1,3-molar bevorzugt.

Die erfindungsgemäß erhältlichen Mischmetallhydroxide mit Brucitstruktur sind gleichzeitig hervorragende Ausgangsmaterialien für die Herstellung von Lithium-Mischmetalloxiden. Die Lithium-Mischmetalloxide werden dadurch hergestellt, dass die Mischmetallhydroxide mit geeigneten Lithiumverbindungen wie Lithiumhydroxid oder Lithiumnitrat vermischt werden und anschließend die Mischung bei Temperaturen oberhalb 600°C gebrannt werden.

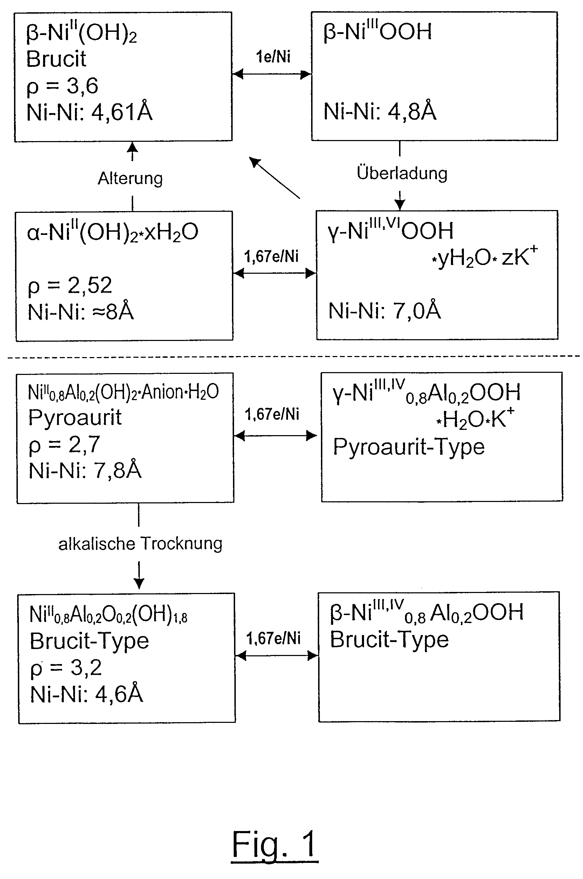

Fig. 1 erläutert in idealisierter Darstellung die mit den unterschiedlichen Nickelhydroxiden erzielbaren Elektronenübergänge. Dabei zeigen die oberen vier Strukturen das an sich bekannte Bode-Diagramm.

Fig. 2 zeigt Röntgenbeugungsspektren von in unterschiedlich konzentrierter Natriumhydroxidlösung alkalisch getrockneten Mischhydroxiden gemäß dem nachfolgenden Beispiel.

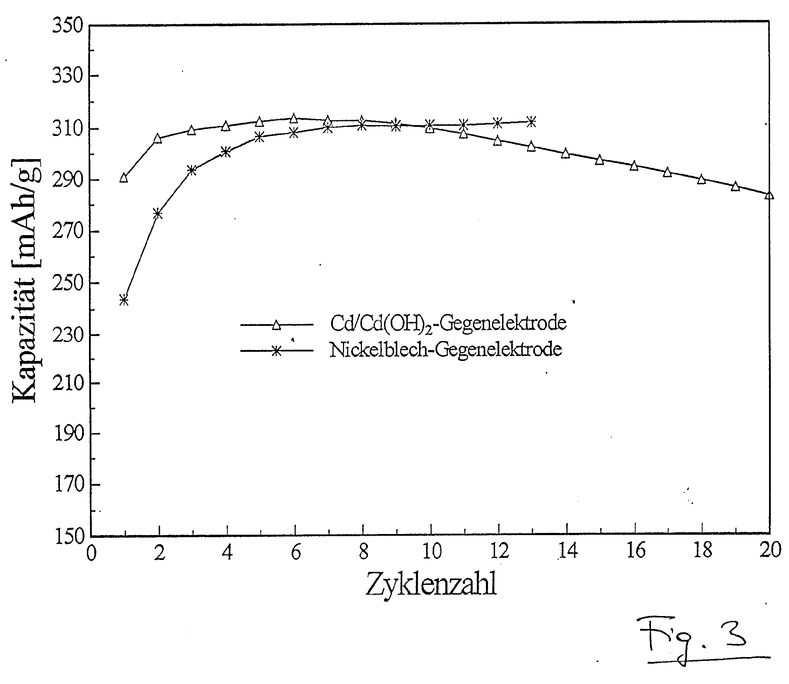

Fig. 3 zeigt die Entladekapazität des Mischhydroxids vom Brucittyp in Abhängigkeit von der Zyklenzahl gemäß nachfolgendem Beispiel.

## Beispiele

a) Herstellung

Die Copräzipitation der substituierten Nickelhydroxide erfolgt durch Eintropfen der gemischten Metallsalzlösung in eine Vorlage von konstantem pH-Wert. Die Zusammensetzung der Metallsalzlösung, der Ausgleichslauge und der Vorlage wird hier für das Beispiel einer Fällung von 0,125 mol eines Nickelhydroxids der Metallionenzusammensetzung $Ni_4Al_{0,75}Co_{0,25}$ bei einem Fällungs-pH-Wert von 12,5 beschrieben. Für andere Metallionenzusammensetzungen wird die Zusammensetzung der Metallsalzlösung entsprechend abgeändert. Bei dieser Ansatzgröße erhält man etwa 10 g getrocknetes Hydroxid.

| 1. Salzlösung | Gesamtmetallionenkonzentration 0,5M |
|---|---|
| | 26,28 g $NiSO_4 \cdot 6\ H_2O$ (= 0,10 mol $Ni^{2+}$) |
| | 12,48 g $Al_2(SO_4)_3 \cdot 18\ H_2O$ (= 1,88 $10^{-2}$ mol $Al^{3+}$) |

(fortgesetzt)

| | |
|---|---|
| 2. Ausgleichslauge | 1,76 g $CoSO_4 \cdot 7\,H_2O$ (= 6,25 $10^{-3}$ mol $Co^{2+}$) |
| | demineralisiertes Wasser ad 250 ml |
| | Hydroxidionenkonzentration 1,0M |
| | 10 g NaOH-Plätzchen (99,5 %ig) |
| | demineralisiertes Wasser ad 250 ml |
| 3. Vorlage | Carbonationenkonzentration 0,5M |
| | 26,50 g $Na_2CO_3$ |
| | demineralisiertes Wasser ad 500 ml |
| | vor Beginn der Fällung tropfenweise Zugabe |
| | von 8M NaOH bis pH 12,5 |

Die Vorlage wird vor der Fällung auf eine Temperatur von 34°C thermostatiert. Während der Fällung wird der pH-Wert gemessen und durch Variation der Zugabegeschwindigkeit der Ausgleichslauge konstant gehalten. Die Rührgeschwindigkeit bei der Fällung beträgt 300 U/min.

Die Salzlösung wird mit einer Geschwindigkeit von 5 ml/Minute mit Membranpumpen in die Vorlage gegeben und der pH-Wert durch Zugabe der Ausgleichslauge bei 12,5 konstant gehalten.

Nach Fällungsende läßt man den Niederschlag 18 Stunden bei Raumtemperatur ohne Rühren altern.

Der Niederschlag wird 10 Minuten bei 6000 U/min abzentrifugiert, die überstehende Lauge verworfen und das Produkt mit einem Rührgerät in einem Liter Waschlauge (NaOH) vom Fällungs-pH bei Raumtemperatur ca. 3 Minuten aufgeschlämmt und danach erneut abzentrifugiert. Dieser Vorgang wird so oft wiederholt bis das auszuwaschende Anion nicht mehr nachweisbar ist.

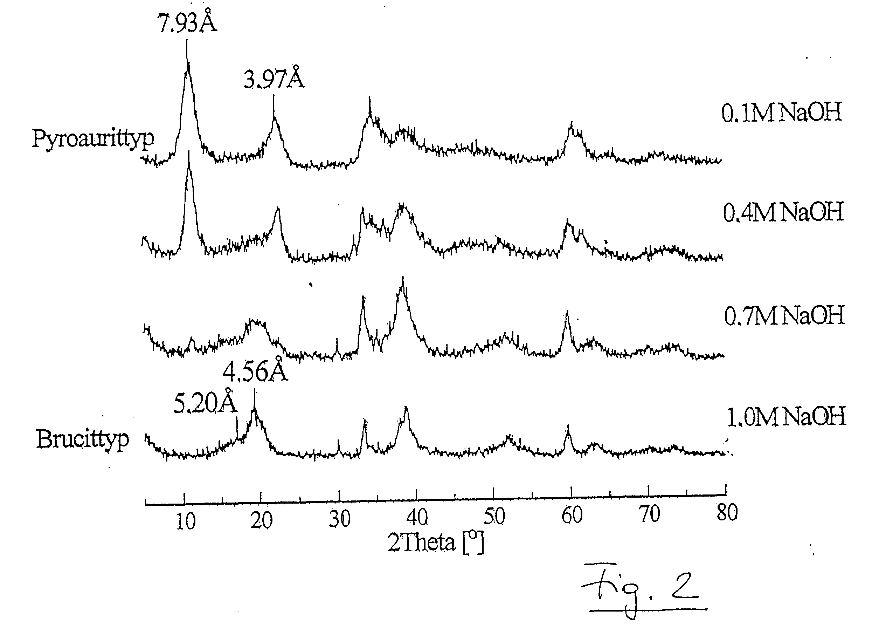

Nach der letzten Zentrifugation suspendiert man das gewaschene Gel in 200 ml einer Natriumhydroxid-Lösung bestimmter Konzentration gemäß Tabelle 1, rührt eine Stunde, zentrifugiert und trocknet mit der anhaftenden Lauge bei 50°C in Wasserstrahlvakuum. Dieses Verfahren wird hier als alkalische Trocknung bezeichnet. In den Produkten nimmt der Umwandlungsgrad mit der Hydroxidionenkonzenration der verwendeten Suspensionslauge zu (Fig. 2). So wird nach Trocknung aus 0,03 molarer und 0,1 molarer Lauge ein Pyroaurittyp erhalten, aus 0,4 molarer Lauge wird ein Spektrum mit geringen Brucitanteilen erhalten. Bei der Trocknung aus 0,7 molarer Lauge ist die Umwandlung in den Brucittyp nahezu vollständig. Das Verhältnis der Metallionen zueinander verändert sich durch diese Behandlung nicht. Es löst sich also kein Aluminium aus der Substanz durch die alkalische Trocknung heraus.

Der erhaltene Brucittyp unterscheidet sich von dem klassischen Brucittyp dadurch, dass der 001-Reflex etwas zu kleineren d-Werten von 4,56 Å statt 4,63 Å verschoben ist. Zusätzlich tritt eine kleine Schulter des 001-Reflexes im Bereich von 5,20 Å auf, die auf eine teilweise Aufweitung des Schichtabstandes gegenüber dem normalen Brucittyp hinweist. Mit einem reinen Nickelhydroxid findet man nach alkalischer Trocknung nicht diese Abweichungen von der bekannten Brucitstruktur, der 001-Peak liegt bei 4,63 Å und es gibt keine Schulter bei höheren d-Werten.

Der Nickelgehalt der $Ni_4Al_{0,75}Co_{0,25}$-Hydroxide erhöht sich mit zunehmendem Anteil der Brucitstruktur (Tabelle 1), ebenso die pyknometrische Dichte.

Tabelle 1:

| Analysenwerte für $Ni_4Al_{0,75}Co_{0,25}$-Hydroxide mit Pyroauritstruktur (oben) und Brucitstruktur (unten) | | | | |
|---|---|---|---|---|
| Trocknungslauge für $Ni_4Al_{0,75}Co_{0,25}$ | Nickelgehalt | Verhältnis Nickel: Kohlenstoff | Verhältnis Nickel: Wasserstoff | Pyknometrische Dichte |
| 0,03M (pH 12,5) | 45,03 % | 1:0,138 | 1:3,85 | 2,65 $g/cm^3$ |
| 0,7M | 46,66 % | 1:0,076 | 1:3,71 | 3,05 $g/cm^3$ |
| 1,0M | 49,16 % | 1:0,071 | 1:3,58 | 3,21 $g/cm^3$ |

In Pyroaurittyp-Nickelhydroxiden besitzen die Hydroxidschichten durch die teilweise Substitution mit dreiwertigen Kationen ($Al^{3+}$, $Co^{3+}$ oder $Fe^{3+}$) eine positive Ladung. Wegen des notwendigen Ladungsausgleichs durch Carbonationen oder andere Anionen ist der Abstand der Hydroxidschichten voneinander auf 7,8 Å aufgeweitet. Zusätzlich befinden sich Wassermoleküle in der Zwischenschicht. Um eine Umwandlung in die Brucitstruktur herbeizuführen, muß die positive Ladung der Hydroxidschichten aufgehoben werden.

Als Mechanismus zur Aufhebung der Hauptschichtladung wird eine teilweise Deprotonierung der Hydroxidionen angenommen. Dieser Vorgang könnte nach folgendem Schema ablaufen:

1. Pro Metall(III)ion wird eine Hydroxidgruppe der Hauptschicht deprotoniert.

2. Die positive Hauptschichtladung ist durch die Entfernung von $H^+$-Ionen aufgehoben.

3. Die negative Zwischenschicht aus Wassermolekülen und Carbonationen ist nun nicht mehr für die Elektronenneutralität der Struktur notwendig und kann austreten.

4. Der Schichtabstand verringert sich von 7,8 Å auf 4,6 Å.

Das vollständig umgewandelte Produkt (Trocknung aus 1,0M NaOH) hat eine pyknometrische Dichte von 3,21 $g/cm^3$. Ein reines Nickel(II)hydroxid, das nach den gleichen Fällungsparametern hergestellt wurde, besitzt eine pyknometrische Dichte von 3,57 $g/cm^3$. Ersetzt man in diesem reinen Nickelhydroxid entsprechend der Formel $Ni_4Al_{0,75}Co_{0,25}$ 17,65 % der Nickelionen durch die leichteren Aluminiumionen, so erhält man rechnerisch eine Dichte von 3,23 $g/cm^3$ in guter Übereinstimmung mit dem gemessenen Wert von 3,21 $g/cm^3$.

b) Untersuchung des Zyklenverhaltens

Zur Überprüfung der elektrochemischen Eigenschaften wurden galvanostatische Ladungen und Entladungen durchgeführt. Als Elektrolyt diente 10 M KOH. 100 mg des Aktivmaterials wurden mit 50 mg Graphit und 3 mg PTFE-Pulver vermischt, zu einer trockenen Paste verrieben und in Nickelschaum eingearbeitet. Die Formierung erfolgte 14h bei 5mA, die weiteren Ladungen 12h bei gleicher Stromstärke. Entladen wurde mit einem Strom von 2,5 mA bis zu einer Entladeschlußspannung von 0,9 V vs. $Cd/Cd(OH)_2$ bzw. 0V vs. Hg/HgO. Bei der Zyklisierung des durch Trocknung aus 0,7 M NaOH hergestellten $Ni_4Al_{0,75}Co_{0,25}$-Brucits in 10 M KOH liegt die maximale Nickelausnutzung bei über 147 %. Dies entspricht einer maximalen massenbezogenen Kapazität von 313 m Ah/g (Fig. 2). Der Nickelgehalt dieses Materials beträgt 46,7 %.

Die maximale Nickelausnutzung des $Ni_4Al_{0,75}Co_{0,25}$-Brucittyps liegt mit 147 % bei einem ähnlichen Wert wie für einen $Ni_4Al_{0,75}Co_{0,25}$-Pyroaurit mit 144 %. Da aber der Nickelgehalt des Brucittyps mit 46,7 % um 6,1 % höher liegt als für den Pyroaurittyp mit 44,0 %, ist auch seine massenbezogene Kapazität mit 310 mAh/g höher als beim Pyroaurittyp mit 290 mAh/g.

**Patentansprüche**

1. Mischmetallhydroxid mit Brucitstruktur enthaltend Nickelhydroxid als Hauptkomponente und mindestens ein dreiwertiges Metall aus der Gruppe Co, Fe, Al, Ga, In, Sc, Y und La in einer Menge von 12 bis 30 Atom-% bezogen auf die Summe der Metallkomponenten einschließlich Ni.

2. Mischmetallhydroxid nach Anspruch 1, enthaltend zusätzlich mindestens eines der Elemente Co, Fe, Mn, Cr, Ti, Zr oder Cu, das sich von dem dreiwertigen Metall unterscheidet, in einer Menge bis 15 Atom-% bezogen auf die Summe aller Metallkomponenten.

3. Mischmetallhydroxid nach Anspruch 1 oder 2, enthaltend 12 bis 25 Atom-% Al.

4. Mischmetallhydroxid nach einem der Ansprüche 1 bis 3, enthaltend 4 bis 9 Atom-% Co.

5. Mischmetallhydroxid nach einem der Ansprüche 1 bis 4 mit einem durch Röntgenbeugung bestimmten Abstand der Nickelschichten von 4,3 bis 4,8.

6. Wiederaufladbare Batterie enthaltend ein Mischmetallhydroxid nach einem der Ansprüche 1 bis 5 als elektrochemisch aktives Material.

7. Verfahren zur Herstellung von Mischhydroxiden nach einem der Ansprüche 1 bis 6 durch Fällung von Mischhydroxid mit Pyroauritstruktur aus entsprechenden Metallsalzlösungen, Suspendierung des Fällungsproduktes in mindestens 0,5-molarer Alkalilösung, Abtrennung von der Alkalilösung und Trocknen in Gegenwart der anhängenden Alkalilösung.

8. Verfahren nach Anspruch 7, wobei eine mindestens 0,9-molare Natriumhydroxidlösung eingesetzt wird.

9.  Verfahren nach Anspruch 7 oder 8, wobei die Fällung in Gegenwart von Oxidationsmitteln erfolgt.

10. Verfahren nach einem der Ansprüche 7 bis 9, das gefällte Nickelhydroxid vor der Suspendierung in Alkalilösung in Carbonatlösung suspendiert, davon abgetrennt und gewaschen wird.

11. Sekundarbatterie enthaltend ein Mischmetallhydroxid nach einem der Ansprüche 1 bis 6.

$\beta$-Ni$^{II}$(OH)$_2$
Brucit
$\rho$ = 3,6
Ni-Ni: 4,61Å

$\longleftrightarrow$ 1e/Ni

$\beta$-Ni$^{III}$OOH

Ni-Ni: 4,8Å

Alterung

Überladung

$\alpha$-Ni$^{II}$(OH)$_2$*xH$_2$O

$\rho$ = 2,52
Ni-Ni: ≈8Å

$\longleftrightarrow$ 1,67e/Ni

$\gamma$-Ni$^{III,VI}$OOH
        *yH$_2$O* zK$^+$

Ni-Ni: 7,0Å

Ni$^{II}_{0,8}$Al$_{0,2}$(OH)$_2$*Anion*H$_2$O
Pyroaurit
$\rho$ = 2,7
Ni-Ni: 7,8Å

$\longleftrightarrow$ 1,67e/Ni

$\gamma$-Ni$^{III,IV}_{0,8}$Al$_{0,2}$OOH
        *H$_2$O*K$^+$
Pyroaurit-Type

alkalische Trocknung

Ni$^{II}_{0,8}$Al$_{0,2}$O$_{0,2}$(OH)$_{1,8}$
Brucit-Type
$\rho$ = 3,2
Ni-Ni: 4,6Å

$\longleftrightarrow$ 1,67e/Ni

$\beta$-Ni$^{III,IV}_{0,8}$Al$_{0,2}$OOH
Brucit-Type

## Fig. 1

Fig. 2

EP 1 103 526 A2

Fig. 3

EP 1 103 526 A2